# EUROPEAN PATENT SPECIFICATION

(11) **EP 3 560 332 B1**
(45) Date of publication and mention of the grant of the patent: **28.07.2021**
(21) Application number: 19170559.9
(22) Date of filing: 23.04.2019
(51) Int. Cl.: A01K 5/02, A01K 39/012, A01K 39/01

(54) **APPARATUS FOR DISTRIBUTING FEED IN FARMING SHEDS AND METHODS FOR DISTRIBUTING FEED WITH THE APPARATUS**
VORRICHTUNG ZUR VERTEILUNG VON FUTTER IN LANDWIRTSCHAFTLICHEN STALLUNGEN UND VERFAHREN ZUR VERTEILUNG VON FUTTER MIT DER VORRICHTUNG
APPAREIL DE DISTRIBUTION D'ALIMENTATION DANS DES HANGARS AGRICOLES ET PROCÉDÉS DE DISTRIBUTION D'ALIMENTATION AVEC L'APPAREIL

(30) Priority: 24.04.2018 IT 201800004808
(43) Date of publication of application: 30.10.2019
(73) Proprietor: Officine Facco & C. S.p.A., 35010 Campo San Martino (IT)
(72) Inventor: FINCO, Massimo, 35122 Padova (IT); FINCO, Luca, Chicago, IL 60611 (US)
(74) Representative: Modiano, Micaela Nadia

(56) References cited:
- GB-A- 1 148 741
- GB-A- 2 362 797

## Description

The present invention relates to an apparatus for distributing feed in farming sheds and to methods for distributing feed with said apparatus.

Currently, poultry facilities are very large and therefore also very complex from a plant engineering perspective. In order to improve their management, they have been provided with automated systems, for example for watering and for feeding the animals, as described for example in GB 1148741 A.

In such facilities it is in fact necessary to distribute several times a day in an automated manner the feed necessary for the survival and the wellbeing of the animals that occupy them.

The facilities are divided internally into modules and rows, in order to create groups of animals that are fed by feed distribution lines or systems arranged inside the facility itself and provided for example with means such as chains, carriages, screw feeders.

The feed necessary for feeding the animals, therefore to be distributed to the various feed lines internal to the apparatus, is generally drawn from a storage location arranged outside the shed, usually consisting of a series of silos.

The silos are provided with gate valves at which the distribution lines are fed.

Two main types of distribution system are currently commercially available.

According to one of these, a distribution line, or more than one, brings the feed from the silos inside of the facility to feed in series internal feed lines that bring the food to respective rows of cages.

The other one instead provides for a distribution line, or more than one, designed to feed an internal loop line, which in turn discharges the feed in various internal lines arranged in parallel, thus feeding simultaneously multiple internal feed lines.

The first distribution system has a significant drawback in that different lengths of the feed lines correspond to a different quantity of feed. In order to feed all the rows of cages, it is necessary to oversize the distribution while however avoiding that after the last row of cages there is still feed on the line, in order to not overstress the driving motor.

The second system requires at least two circuits (one for loading the internal loop line and one constituted by the loop itself) in order to reach the lines for distribution to the rows of cages and therefore, in case of failures of one of the two, the system is not able to distribute the feed to the various internal lines. In order to obtain a safety redundancy, four circuits are necessary.

The aim of the present invention is to provide an apparatus for distributing feed that is capable of improving the background art in one or more of the aspects mentioned above.

Within this aim, an object of the invention is to provide an apparatus for distributing feed and to propose a method for distributing with said apparatus, which allows to avoid the overloading of the system with excess feed, in order to ensure a long life of the components of the apparatus.

Another object of the invention is to ensure an adequate supply of feed to all the internal lines for distribution to the rows of cages.

Another object of the invention is to minimize the number of feeding line by ensuring a continuous supply of feed to the animals, even in case of maintenance on one of the lines.

Moreover, an object of the present invention is to overcome the drawbacks of the background art in a manner that is alternative to any existing solutions.

Another object of the invention is to provide an apparatus that is highly reliable, relatively easy to provide and at competitive costs.

This aim and these and other objects which will become better apparent hereinafter are achieved by an apparatus for distributing feed in farming sheds, the invention is defined by the apparatus claim 1 and the methods claims 5 and 7.

Further characteristics and advantages of the invention will become better apparent from the description of a preferred but not exclusive embodiment of the apparatus for distributing feed according to the invention, illustrated by way of non-limiting example in the accompanying drawings, wherein:
Figure 1 is a view of an apparatus according to the invention;
Figure 2 is a schematic view of an apparatus according to the invention;
Figure 3 is a sectional side view of a container for feed, installed in an apparatus according to the invention;
Figure 4 is a side view of the container at right angles to the cross-section of Figure 3;
Figure 5 is a view of a component of the apparatus according to the invention.

With reference to the cited figures, the apparatus according to the invention, generally designated by the reference numeral 10, comprises:
- at least one line for the distribution of feed from at least one storage location to a series of dispensers for dispensing the feed to the cages of animals,
- at least one feed container conntected to said line upstream and downstream of said dispensers respectively for the loading and discharging of feed, on the part of said line, not released to said dispensers,
- means for detecting the level of feed inside said container,
- at least one control system adapted to receive filling information of said feed container from said detection means and to control the loading of said line with feed from said storage location or from said feed container and to set the travel speed of said line.

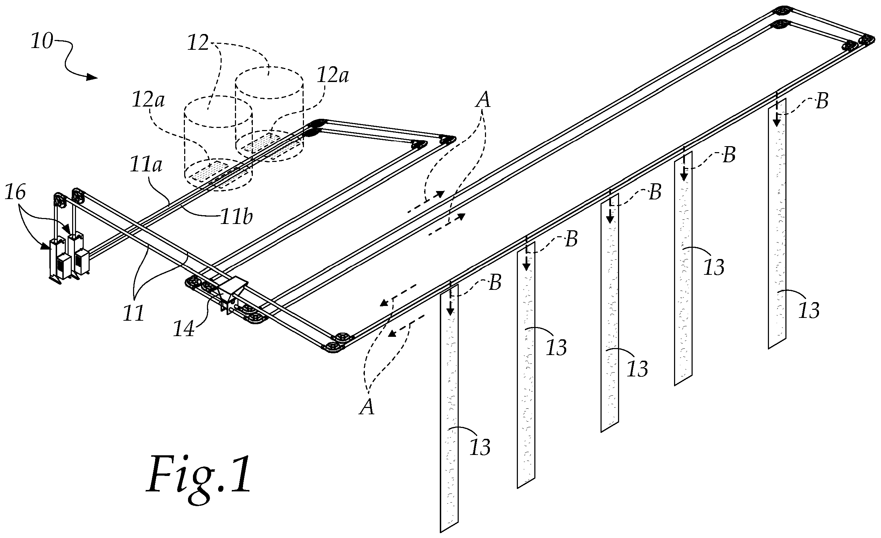

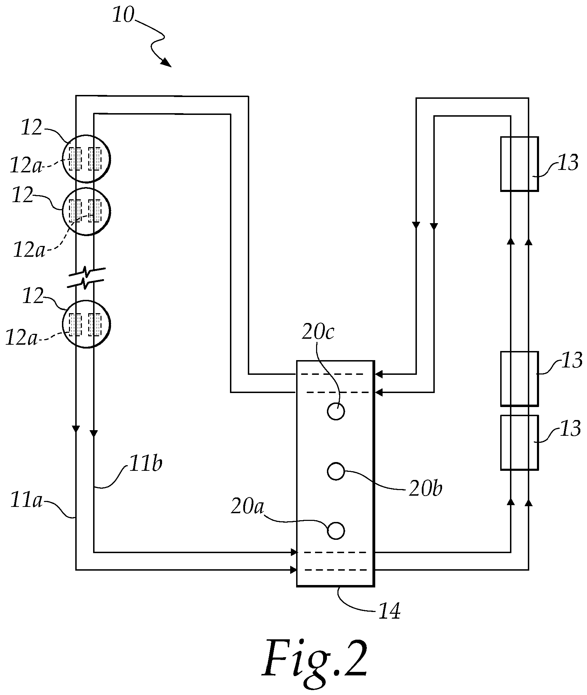

The apparatus 10 is shown in its entirety in Figure 1. In the illustrated example, the apparatus 10 comprises two lines 11, designated respectively by 11a and 11b in this figure and in the subsequent Figure 2. Moreover, Figure 1 also schematically shows five dispensers 13; their number may be different and equal to the number of rows of cages that they feed. These dispensers 13, in a poultry facility, consist preferably of ducts in which the food descends by gravity and which should be always full of feed in order to ensure a continuous supply to the feed dispensers of the animals.

The lines 11 are adapted to bring the food to the dispensers 13, following a path along which the chains or screw feeders (or the like), of which they are composed, are drawn by means of adapted traction devices 16.

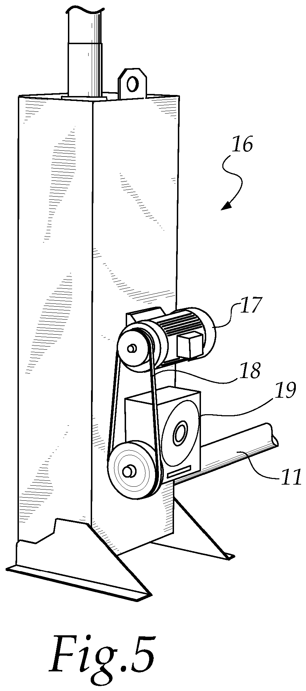

A traction device 16 is shown in an enlarged-scale view in Figure 5, wherein the box that contains it is open in order to see its internal elements. Among these, the motor 17, the transmission belt 18 from the motor 17 and a gearmotor 19 with which the line 11 is associated, are visible.

The apparatus 10 can also comprise just one line 11.

The speed of the line 11 (or lines) can be kept constant or variable during the operation of the apparatus. In the first case, the control system activates and deactivates the line, with an on/off control, moving it and stopping it according to the requirements. In the second case, the control system modifies the speed of the line, again according to the requirements.

The feed container 14, besides representing an intermediate feed discharging and loading point, allows to detect the quantity of excess feed at the return of the line 11a, 11b toward the traction device 16. It has a hopper-like shape, open upward to receive the excess feed from the line 11a, 11b, downstream of the duct-like dispensers 13, and has also regions for loading feed to the line 11a, 11b upstream of said dispensers 13.

The detection means 15 comprise at least two sensors 20 adapted to detect the presence of feed inside the container 14, installed therein at different heights.

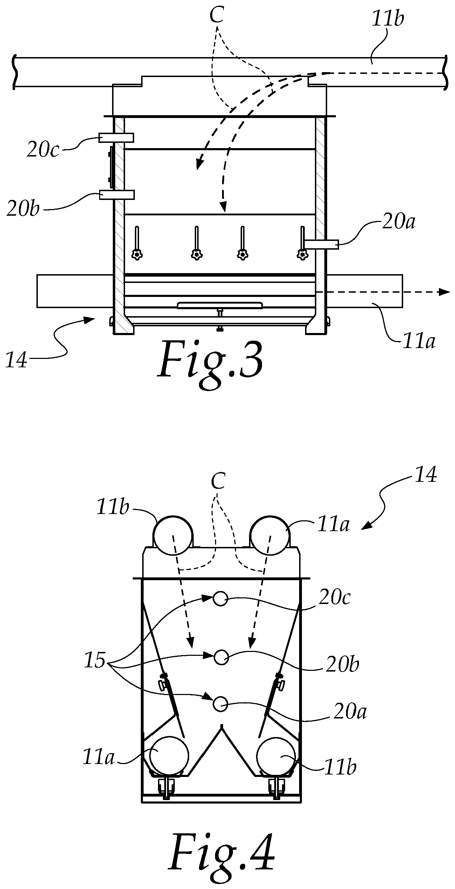

They are designated in Figure 3 and in Figure 4 by 20a, 20b and 20c from the lowest to the highest.

In particular, the first sensor 20a is the sensor for detecting the minimum quantity of feed considered useful for continuous supply to the cages. It cooperates with the control system in returning the information related to the presence of feed up to the level at which it is installed.

The second sensor 20b returns to the control system the information related to the presence of feed up to the level at which it is installed, higher than the preceding one, in order to adjust the speed and the flow rate of the chains, or to deactivate and reactivate (on/off control) the lines in case of operation at constant speed.

The third sensor 20c is a safety sensor, adapted to return to the control system the information related to the presence of feed at a level for which it is necessary to intervene with the disposal of the excess feed, indicating an anomaly in the operation of the lines or an incorrect quantification of the flow rates of feed to the cages.

The storage locations 12 are shown schematically in Figures 1 and 2 and consist preferably of silos. Below the locations 12 there are gate valves, designed by the reference numeral 12a, which can be motorized.

Figure 2 indicates the travelling direction of the lines. It is also shown in Figure 1 with the arrows designated by A.

In Figure 1, the descent of feed in the ducts of the dispensers 13 is also designated by B.

In Figure 3 and in Figure 4, the discharge of excess feed, returning from the dispensers 13, into the container 14 is designated by C.

The invention also relates to a method for distributing feed with the above described apparatus, which, in normal conditions of operation and using two of said lines, consists in:
- with at least one first line of said lines, drawing the feed from at least one of said at least one storage location and said feed container, in passing upstream of said dispensers, and discharging the feed into said container, in passing downstream of said dispensers,
- with a second line of said lines, drawing the feed from said container, in passing upstream of said dispensers, discharging it to said dispensers and any excess to said container in passing downstream of said dispensers.

In normal conditions of operation, even without motorized gate valves under the storage locations, the method according to the invention uses the apparatus 10 already described in order to bring the feed level up to the second sensor 20b, thus ensuring that the cages are constantly fed. In fact, if the feed dispensers are full, they do not receive further feed and the excess feed is poured into the container 14 until it reaches the second sensor 20b and thus a second filling level.

In the preparation of the apparatus, the circuit of a first line 11a cooperates with silos, the gate valves of which must be completely open and the discharge hatches of which must be completely closed, thus obtaining a circuit the loading points of which are the silos (i.e., the storage locations 12) and the container 14, upstream of the dispensers 13, and the only discharging point of which is the container 14 itself, downstream of said dispensers 13.

For the circuit of the second line 11b, the gate valves of the silos are kept completely closed and the discharge hatches are kept completely open, obtaining a circuit the loading point of which is the container 14, in passing upstream of the dispensers 13, and the only discharging points of which are the dispensers 13 and said container 14, downstream of said dispensers 13.

The method provides for a step in which with the first line 11a it draws the feed from at least one of the storage locations 12 or from the container 14, in passing upstream of the dispensers 13, and discharges the feed into said container 14, in passing downstream of said dispensers 13.

The second line 11b draws the feed from the container 14, in its passing upstream of the dispensers 13, and discharges it to said lines 13. The feed that is found to be in excess is instead discharged again to the container 14, in passing downstream of the dispensers 13.

The method also comprises the stop of the first line 11a, if the level of feed reaches a second filling level, higher than a first filling level, and therefore if the presence of feed is detected by the second sensor 20b in the container 14.

Substantially, the control system adjusts the speed of the lines 11 according to the following logic.

With the chains motionless, i.e, with the internal battery supply system stopped, the control system actuates the second line 11b at a fixed speed and preferably at 50% of the maximum allowed speed, the first line 11a at high speed, calculated at approximately 90% of the maximum allowed speed, when the three sensors 20a, 20b and 20c do not detect feed. If the first of the sensors 20a, the one at the lowest level, detects feed and the other two do not detect feed, the control system actuates the line 11a at a medium speed, approximately at 40% of the maximum allowed speed. If the first two sensors 20a and 20b detect feed and the third one 20c does not detect feed, the control system actuates the line at low speed, approximately 10% of the maximum speed. If, after a delay of few seconds from when the first two sensors 20a and 20b detect feed, the third one 20c also detects feed, the line 11a is stopped.

In practice, once the second filling level, signaled by the second sensor 20b, has been reached, the first line 11a slows down until it stops. At the same time, the second line 11b remains operational for a predetermined time interval, to be set so as to ensure an even distribution of the feed available in the container on all the dispensers 13 for feeding the rows of cages.

As long as the feed dispensers are full, the dispensers 13 also remain full and do not receive further feed from the second line 11b, with the effect that what has been drawn by the line 11b from the container 14 is discharged again in the same container, therefore keeping stable the level of feed inside it.

At the end of the preset time, the first line 11a is also stopped, leaving the dispenser channels 13 full and the container 14 with feed up to the second filling level.

When instead the feed dispensers are not full, they are able to receive feed, therefore the feed drawn with the second line 11b from the container 14 is discharged to the dispensers 13, producing a drop in the feed level in the container 14, thus making the first line 11a restart.

With the chains in motion, the speeds are set in the following manner.

When the feed level is equal to or higher than the first level, indicated by the first sensor 20a, the control system calculates automatically the speed of the first line 11a by observing over time the first two sensors 20a and 20b. The speed is calculated so as to maintain the feed level in the container as constant as possible, delaying the intervention time of the two sensors.

In a normal system with electric control, operation is of the on/off type, therefore it activates and deactivates the lines.

The speed of the second line 11b can in fact be set in two ways. In one solution it is kept constant, possibly higher than the maximum speed set for the first line 11a. In another solution it is instead calculated by means of a PLC: its value depends on the speed of the first line 11a and is equal to the sum of the latter with an offset value. For example, with an offset value of 10% and a speed of the first line 11a at 30% of the maximum allowed speed, the value of the speed of the second line 11b is equal to 40% of the maximum allowed speed.

The apparatus 10 can operate even with just one line 11.

The invention also relates to a method for the distribution of feed with the above mentioned apparatus, which consists in:
- drawing, with at least one of the lines, the feed from the at least one storage location,
- distributing the drawn feed to the dispensers,
- discharging any excess feed into the feed container, downstream of the dispensers,
- if the feed level in the container reaches a second filling level, reducing the speed of the line in travel along the distribution circuit, otherwise drawing again the feed from the at least one storage location.

This method is applied conveniently in case of a stop of a line 11, for example for maintenance thereof, as will be described hereinafter.

With two total and operational lines available, designated as first line 11a and as second line 11b, the drawing openings of the silos 12 are opened at 75% and the ones of the container 14 are opened completely. The loading ports at the dispensers 13 are also opened completely.

The two circuits of the lines 11a, 11b are set up exactly in the same way and accordingly are interchangeable with the prospect of a stop of one of them for maintenance.

The goal of the system is, in this case also, to keep the feed dispensers full, therefore a feed level in the container 14 comprised between the first two levels identifiable with the first two sensors 20a and 20b, without furthermore reaching the third level, which can be identified with the third sensor 20c, and without remaining at a level lower than the first one for too long.

When the system is completely empty, the two lines 11a and 11b are activated and draw the feed from the storage location 12.

The next step of the method provides for the distribution of the drawn feed, by the lines 11a and 11b, to the dispensers 13. In order to reach the dispensers, the lines pass through the container 14 without drawing any additional feed, since the container 14 is still empty.

The feed falls sequentially in the ducts of the dispensers 13, filling them progressively.

Both lines 11 operate at the maximum allowed speed.

When the feed dispensers are full, the dispensers 13 are filled as well. The next step of the method provides for discharging any excess feed in the container for feed 14, downstream of the dispensers 13.

Once the first level has been reached, the control system applies a specific reference speed to the lines.

Thus, when the feed level in the container 14 reaches a first filling level, the speed of the line 11a, 11b travelling along the distribution circuit is reduced.

If the feed level drops below the first filling level, which can be detected with the first sensor 20a, the speed of the lines 11a, 11b travelling along the distribution circuit is increased, preferably bringing it back to the maximum one allowed by the apparatus; otherwise, if the feed level reaches a second filling level, greater than the first one and detectable with the second sensor 20b, the speed is reduced, preferably bringing it back to the minimum allowed speed. If a speed variation device is not present, in the first case the lines are activated (on) and in the second case they are halted (off).

If, after a given time interval, the feed level drops below the second filling level of the feed container 14, which can be detected with the second sensor 20b, the feed is again drawn from the storage location 12, otherwise it is drawn from the feed container 14.

When the feed in the container 14 remains, for a given time interval, equal to or higher than the second filling level, the method comprises the following steps:
- stopping the first line 11a;
- drawing feed, with the second line 11b, from the feed container 14.

In this last step, the second line 11b is disconnected from the storage location 12, i.e., the silo, by means of the closure of the corresponding gate valve.

Subsequently, if the feed level drops below the second filling level, the method provides for the reactivation of the first line 11a, which draws feed from the storage location 12. The speed in travel along the circuit by the first line 11a will be set equal to the reference speed applied previously to both lines.

The method also comprises the following step: if the feed level in the container 14 drops below the first filling level and remains in this condition for a time that exceeds a preset time interval, the second line 11b is returned to draw feed from the storage location 12.

Substantially, when it is necessary to use maximum flow rates, therefore it is necessary to use always all the available lines, the system also uses the motorized gate valves below the silos, i.e., below the locations 12, which modulate their opening and closure based on need.

In this case, the lines 11a and 11b both go to load the feed, the container 14 controls the filling level with the sensors and, if it is filled too much, the system closes the drawing of feed from the locations 12 by means of the automatic gate valves 12a, to then reopen them when the level drops.

All the speed controls of the lines can be at variable or fixed speed with only on/off control and with minimum, maximum or medium value control.

The operation of the apparatus, according to the invention, is evident from what has been described and in particular from the methods it is evident that the lines, once the feed has been discharged at the various dispensers 13, and before returning to the silos, can discharge the excess feed into the container 14, thus making it recirculate inside a sort of virtual loop.

This allows to design an apparatus in which the installation of independent circuits is not indispensable.

The apparatus, by virtue of sensors adapted to read the feed level inside the container, is capable of establishing whether the feed drawn from the storage locations is sufficient or not to feed the inner dispensers and thus controls the flow rate by adjusting, by means of the control system, the speeds of the lines and/or the quantity of feed dispensed from the storage locations through the control of the opening of the gate valves.

The different lines present in the system can be fed in parallel and can operate independently or in combination, as a function of the detected distribution requirements.

A single line can be sufficient to bring the feed inside the shed and to the dispensers, or if, as in the case presented as an example, there are two lines, it is possible to ensure the supply even in case of a stop of one of them, for example for maintenance purposes.

In practice it has been found that the invention achieves the intended aim and objects, providing an apparatus for distributing feed that allows to avoid situations of overload with excess feed, capable of ensuring an adequate supply of feed to the internal distribution lines and a continuous supply of feed to the animals, even in case of maintenance at one of the lines.

All the details may furthermore be replaced with other technically equivalent elements.

In practice, the materials used, so long as they are compatible with the specific use, as well as the contingent shapes and dimensions, may be any according to the requirements and the state of the art.

This application claims priority of the disclosures in Italian Patent Application No. 102018000004808.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for distributing feed in farming sheds, comprising:
- at least one line (11a, 11b) for the distribution of feed from at least one storage location (12) to a series of dispensers (13) for dispensing the feed to the cages of animals,
- at least one feed container (14) connected to said line (11a, 11b) upstream of said dispensers (13) for the loading of feed from said storage location (12) into said feed container (14), said feed container (14) also connected to said line (11a, 11b) downstream of said dispensers (13) for discharging of feed into said feed container (14), on the part of said line (11a, 11b), not released to said dispensers (13),
- means (15) for detecting the level of feed inside said container (14),
- at least one control system adapted to receive filling information of said feed container (14) from said detection means (15) and to control the loading of said line (11a, 11b) with feed from said storage location (12) or from said feed container (14) and to set the travel speed of said line (11a, 11b).

2. The apparatus according to claim 1, **characterized in that** said detection means (15) comprise at least two sensors (20) adapted to detect the presence of feed inside said container (14), installed therein at different heights.

3. The apparatus according to one or more of the preceding claims, **characterized in that** said container (14) is open in an upper region in order to receive feed from said line (11a, 11b) and is also provided with regions for loading the feed to said line (11a, 11b).

4. The apparatus according to one or more of the preceding claims, **characterized in that** said at least one storage location (12) consists of a silo.

5. A method for distributing feed with the apparatus (10) according to one or more of claims 1 to 4, which, in normal conditions of operation and using at least two of said lines (11a, 11b), consists in:
- with at least one first line of said lines (11a), drawing the feed from at least one of said at least one storage location (12) and said feed container (14), in passing upstream of said dispensers (13), and discharging the feed into said container (14), in passing downstream of said dispensers (13),
- with a second line of said lines (11a, 11b), drawing the feed from said container (14), in passing upstream of said dispensers (13), discharging it to said dispensers (13) and any excess to said container (14) in passing downstream of said dispensers (13).

6. The method according to claim 5, **characterized in that** it comprises the stop of said first line (11a) if the level of feed reaches a second filling level which is higher than a first filling level.

7. A method for distributing feed with the apparatus (10) according to one or more of claims 1 to 4, which consists in:
- drawing, with at least one of said lines (11a, 11b), the feed from said at least one storage location (12),
- distributing the drawn feed to said dispensers (13),
- discharging any excess feed into said feed container (14), downstream of said dispensers (13),
- when the feed level in said container (14) reaches a second filling level which is higher than a first filling level, reducing the speed of said line (11a, 11b) travelling along the distribution circuit.

8. The method according to claim 7, **characterized in that** it comprises the following steps:
- if the feed level in said feed container (14) decreases below the first filling level, increasing the speed of said line (11a, 11b) travelling along the distribution circuit, otherwise
- if the feed level reaches the second filling level, higher than the first one, reducing the speed.

9. The method according to claim 8, **characterized in that** it comprises the following step: if, after a certain time interval, the feed level drops below the second filling level of said feed container (14), drawing feed again from said at least one storage location (12), otherwise drawing from said feed container (14).

10. The method according to claim 9, **characterized in that**, in the presence of two lines (11a, 11b), when the feed level in said feed container (14) remains, for a given time interval, equal to or greater than said second filling level, it comprises the following steps:
- stopping a first one of said lines (11a),
- drawing feed, with a second one of said lines (11b), from said feed container (14).

11. The method according to claim 10, **characterized in that** it comprises the following step: if the feed level drops below said second filling level, reactivating said first line (11a), which draws feed from said at least one storage location (12).

12. The method according to claim 11, **characterized in that** it comprises the following step: if the feed level in said container (14) drops below the first filling level and remains in this condition for a time that exceeds a preset time interval, returning said second line (11b) to draw feed from said at least one storage location (12).

## Patentansprüche

1. Eine Vorrichtung zur Verteilung von Futter in landwirtschaftlichen Stallungen, die Folgendes umfasst:
- mindestens eine Linie (11a, 11b) zur Verteilung von Futter von mindestens einem Speicherort (12) an eine Reihe von Spendern (13) zur Abgabe des Futters an die Käfige von Tieren,
- mindestens einen Futterbehälter (14), verbunden mit der Linie (11a, 11b) stromaufwärts von den Spendern (13) zur Abgabe von Futter von dem Speicherort (12) in den Futterbehälter (14), wobei der Futterbehälter (14) auch mit der Linie (11a, 11b) stromabwärts von den Spendern (13) verbunden ist, zum Abgeben von Futter in den Futterbehälter (14) durch die Linie (11a, 11b), das nicht an die Spender (13) abgegeben wurde,
- Mittel (15) zur Erfassung der Füllhöhe von Futter in dem Behälter (14),
- mindestens ein Steuerungssystem, ausgebildet, um Füllinformationen des Futterbehälters (14) von den Erfassungsmitteln (15) zu empfangen und um die Beladung der Linie (11a, 11b) mit Futter von dem Speicherort (12) oder von dem Futterbehälter (14) zu steuern und um die Vorschubgeschwindigkeit der Linie (11a, 11b) einzustellen.

2. Die Vorrichtung gemäß Anspruch 1, **dadurch gekennzeichnet, dass** die Erfassungsmittel (15) mindestens zwei Sensoren (20) umfassen, ausgebildet, um die Anwesenheit von Futter in dem Behälter (14) zu erfassen, auf verschiedenen Höhen darin installiert.

3. Die Vorrichtung gemäß einem oder mehreren der obigen Ansprüche, **dadurch gekennzeichnet, dass** der Behälter (14) in einem oberen Bereich offen ist, um Futter von der Linie (11a, 11b) zu empfangen, und außerdem mit Bereichen zur Abgabe des Futters an die Linie (11a, 11b) ausgestattet ist.

4. Die Vorrichtung gemäß einem oder mehreren der obigen Ansprüche, **dadurch gekennzeichnet, dass** der mindestens eine Speicherort (12) aus einem Silo besteht.

5. Ein Verfahren zur Verteilung von Futter mit der Vorrichtung (10) gemäß einem oder mehreren der Ansprüche 1 bis 4, das, bei normalen Betriebszuständen und unter Verwendung mindestens zweier der Leitungen (11a, 11b), aus Folgendem besteht:
- mit mindestens einer ersten der Leitungen (11a), dem Entnehmen des Futters aus dem mindestens einen Speicherort (12) und/oder dem Futterbehälter (14) beim Durchlauf stromaufwärts von den Spendern (13) und dem Abgeben des Futters in den Behälter (14) beim Durchlauf stromabwärts von den Spendern (13),
- mit einer zweiten der Leitungen (11a, 11b), dem Entnehmen des Futters aus dem Behälter (14) beim Durchlauf stromaufwärts von den Spendern (13), dem Abgeben desselben an die Spender (13) und eventuellen Überschusses an den Behälter (14) beim Durchlauf stromabwärts von den Spendern (13) .

6. Das Verfahren gemäß Anspruch 5, **dadurch gekennzeichnet, dass** es das Anhalten der ersten Linie (11a) umfasst, wenn die Füllhöhe des Futters ein zweites Füllniveau erreicht, das höher ist als ein erstes Füllniveau.

7. Ein Verfahren zur Verteilung von Futter mit der Vorrichtung (10) gemäß einem oder mehreren der Ansprüche 1 bis 4, das aus Folgendem besteht:
- dem Entnehmen, mit mindestens einer der Linien (11a, 11b), des Futters von dem mindestens einen Speicherort (12),
- dem Verteilen des entnommenen Futters an die Spender (13),
- dem Abgeben überschüssigen Futters in den Futterbehälter (14) stromabwärts von den Spendern (13),
- wenn die Futter-Füllhöhe in dem Behälter (14) ein zweites Füllniveau erreicht, das höher ist als ein erstes Füllniveau, das Reduzieren der Geschwindigkeit der Linie (11a, 11b), die sich entlang dem Verteilkreislauf bewegt.

8. Das Verfahren gemäß Anspruch 7, **dadurch gekennzeichnet, dass** es folgende Schritte umfasst:
- wenn die Futter-Füllhöhe in dem Futterbehälter (14) unter das erste Füllniveau sinkt, das Erhöhen der Geschwindigkeit der Linie (11a, 11b), die sich entlang dem Verteilkreislauf bewegt; ansonsten,
- wenn die Futter-Füllhöhe das zweite Füllniveau, höher als das erste, erreicht, das Vermindern der Geschwindigkeit.

9. Das Verfahren gemäß Anspruch 8, **dadurch gekennzeichnet, dass** es folgenden Schritt umfasst: wenn nach einem gewissen Zeitintervall die Futter-Füllhöhe unter das zweite Füllniveau des Futterbehälters (14) sinkt, erneutes Entnehmen von Futter aus dem mindestens einen Speicherort (12); ansonsten Entnehmen aus dem Futterbehälter (14).

10. Das Verfahren gemäß Anspruch 9, **dadurch gekennzeichnet, dass** es, bei Vorliegen zweier Linien (11a, 11b), wenn die Futter-Füllhöhe in dem Futterbehälter (14) für ein bestimmtes Zeitintervall größer als oder gleich dem zweiten Füllniveau bleibt, folgende Schritte umfasst:
- das Anhalten einer ersten der Linien (11a),
- das Entnehmen von Futter aus dem Futterbehälter (14) mit einer zweiten der Linien (11b).

11. Das Verfahren gemäß Anspruch 10, **dadurch gekennzeichnet, dass** es folgenden Schritt umfasst: wenn die Futter-Füllhöhe unter das zweite Füllniveau fällt, das Reaktivieren der ersten Linie (11a), die Futter aus dem mindestens einen Speicherort (12) entnimmt.

12. Das Verfahren gemäß Anspruch 11, **dadurch gekennzeichnet, dass** es folgenden Schritt umfasst: wenn die Futter-Füllhöhe in dem Behälter (14) unter das erste Füllniveau fällt und in diesem Zustand über einen Zeitraum bleibt, der ein vordefiniertes Zeitintervall überschreitet, das Zurücksetzen der zweiten Linie (11b), um Futter aus dem mindestens einen Speicherort (12) zu entnehmen.

## Revendications

1. Appareil pour distribuer de la nourriture dans des hangars agricoles, comportant :
- au moins une ligne (11a, 11b) pour la distribution de nourriture à partir d'au moins un emplacement de stockage (12) à une série de distributeurs (13) pour distribuer la nourriture aux cages d'animaux,
- au moins un contenant de nourriture (14) relié à ladite ligne (11a, 11b) en amont des distributeurs (13) pour le chargement de nourriture à partir dudit emplacement de stockage (12) dans ledit contenant de nourriture (14), ledit contenant de nourriture (14) étant également relié à ladite ligne (11a, 11b) en aval desdits distributeurs (13) pour charger de la nourriture dans ledit contenant de nourriture (14), sur la partie de ladite ligne (11a, 11b), non libérée dans lesdits distributeurs (13),
- des moyens (15) pour détecter le niveau de nourriture à l'intérieur dudit contenant (14),
- au moins un système de commande adapté pour recevoir des informations de remplissage dudit contenant de nourriture (14) provenant desdits moyens de détection (15) et pour commander le chargement de ladite ligne (11a, 11b) avec de la nourriture provenant dudit emplacement de stockage (12) ou provenant dudit contenant de nourriture (14) et pour régler la vitesse de déplacement de ladite ligne (11a, 11b).

2. Appareil selon la revendication 1, **caractérisé en ce que** lesdits moyens de détection (15) comportent au moins deux capteurs (20) adaptés pour détecter la présence de nourriture à l'intérieur dudit contenant (14), installé dans celui-ci à différentes hauteurs.

3. Appareil selon une ou plusieurs des revendications précédentes, **caractérisé en ce que** ledit contenant (14) est ouvert dans une zone supérieure afin de recevoir de la nourriture à partir de ladite ligne (11a, 11b) et est également pourvu de zones pour charger la nourriture sur ladite ligne (11a, 11b).

4. Appareil selon une ou plusieurs des revendications précédentes, **caractérisé en ce que** ledit au moins un emplacement de stockage (12) est constitué d'un silo.

5. Procédé pour distribuer de la nourriture avec l'appareil (10) selon une ou plusieurs des revendications 1 à 4, qui, en conditions de fonctionnement normales et en utilisant au moins deux desdites lignes (11a, 11b), consiste à :
- avec au moins une première ligne desdites lignes (11a), prélever la nourriture à partir d'au moins un élément parmi ledit au moins un emplacement de stockage (12) et ledit contenant de nourriture (14), en passant en amont desdits distributeurs (13), et décharger la nourriture dans ledit contenant (14), en passant en aval desdits distributeurs (13),
- avec une seconde ligne desdites lignes (11a, 11b), prélever la nourriture à partir dudit contenant (14), en passant en amont desdits distributeurs (13), la décharger dans lesdits distributeurs (13) et tout excès dans ledit contenant (14) en passant en aval desdits distributeurs (13).

6. Procédé selon la revendication 5, **caractérisé en ce qu'**il comporte l'arrêt de ladite première ligne (11a) si le niveau de nourriture atteint un second niveau de remplissage qui est plus haut qu'un premier niveau de remplissage.

7. Procédé pour distribuer de la nourriture avec l'appareil (10) selon une ou plusieurs des revendications 1 à 4, qui consiste à :
- prélever, avec au moins une desdites lignes (11a, 11b), la nourriture à partir dudit au moins un emplacement de stockage (12),
- distribuer la nourriture prélevée auxdits distributeurs (13),
- décharger tout excès de nourriture dans ledit contenant de nourriture (14), en aval desdits distributeurs (13),
- lorsque le niveau de nourriture dans ledit contenant (14) atteint un second niveau de remplissage qui est plus haut qu'un premier niveau de remplissage, réduire la vitesse de ladite ligne (11a, 11b) se déplaçant le long du circuit de distribution.

8. Procédé selon la revendication 7, **caractérisé en ce qu'**il comporte les étapes suivantes :
- si le niveau de nourriture dans ledit contenant de nourriture (14) diminue sous le premier niveau de remplissage, augmenter la vitesse de ladite ligne (11a, 11b) se déplaçant le long du circuit de distribution, sinon
- si le niveau de nourriture atteint le second niveau de remplissage, plus haut que le premier, réduire la vitesse.

9. Procédé selon la revendication 8, **caractérisé en ce qu'**il comporte l'étape suivante : si, après un certain intervalle de temps, le niveau de nourriture chute sous le second niveau de remplissage dudit contenant de nourriture (14), prélever de nouveau de la nourriture à partir dudit au moins un emplacement de stockage (12), sinon prélever à partir dudit contenant de nourriture (14).

10. Procédé selon la revendication 9, **caractérisé en ce que**, en présence de deux lignes (11a, 11b), lorsque le niveau de nourriture dans ledit contenant de nourriture (14) reste, pendant un intervalle de temps donné, égal ou supérieur audit second niveau de remplissage, il comporte les étapes suivantes :
- arrêter une première desdites lignes (11a),
- prélever de la nourriture, avec une seconde desdites lignes (11b), à partir dudit contenant de nourriture (14).

11. Procédé selon la revendication 10, **caractérisé en ce qu'**il comporte l'étape suivante : si le niveau de nourriture chute sous ledit second niveau de remplissage, réactiver ladite première ligne (11a), qui prélève de la nourriture à partir dudit au moins un emplacement de stockage (12).

12. Procédé selon la revendication 11, **caractérisé en ce qu'**il comporte l'étape suivante : si le niveau de nourriture dans ledit contenant (14) chute sous le premier niveau de remplissage et reste dans cet état pendant un temps qui dépasse un intervalle de temps prédéfini, faire revenir ladite seconde ligne (11b) pour prélever de la nourriture à partir dudit au moins un emplacement de stockage (12).
